# FASCICULE DE BREVET EUROPEEN

(11) **EP 1 623 958 B1**
(45) Date de publication et mention de la délivrance du brevet: **01.01.2014**
(21) Numéro de dépôt: 05291632.7
(22) Date de dépôt: 01.08.2005
(51) Int. Cl.: C02F 1/72, C02F 1/30

(54) **Procédé et dispositifs de traitement de fluides pollués par photocatalyse**
Verfahren und Vorrichtungen zur photokatalytischen Behandlung von beschmutzter Flüssigkeiten
Method and devices for the photocatalytic treatment of polluted fluids

(30) Priorité: 02.08.2004 FR 0408512
(43) Date de publication de la demande: 08.02.2006
(73) Titulaire: Bonduelle, Laurent, 75012 Paris (FR)
(72) Inventeur: Bonduelle, Laurent, 75012 Paris (FR)
(74) Mandataire: Parzy, Benjamin Alain

(56) Documents cités:
- EP-A- 0 993 859
- GB-A- 2 359 301
- US-A- 6 063 343
- PATENT ABSTRACTS OF JAPAN vol. 2003, no. 12, 5 décembre 2003 (2003-12-05) -& JP 2004 100110 A (ASAHI KASEI CHEMICALS CORP), 2 avril 2004 (2004-04-02)
- PATENT ABSTRACTS OF JAPAN vol. 2003, no. 07, 3 juillet 2003 (2003-07-03) -& JP 2003 062566 A (AIHARA TAKESHI), 4 mars 2003 (2003-03-04)
- PATENT ABSTRACTS OF JAPAN vol. 1997, no. 01, 31 janvier 1997 (1997-01-31) -& JP 08 224574 A (SEIWA KOGYO KK; MITSUBISHI PAPER MILLS LTD), 3 septembre 1996 (1996-09-03)
- PATENT ABSTRACTS OF JAPAN vol. 2003, no. 09, 3 septembre 2003 (2003-09-03) & JP 2003 139465 A (MATSUSHITA REFRIG CO LTD), 14 mai 2003 (2003-05-14)
- PATENT ABSTRACTS OF JAPAN vol. 2000, no. 22, 9 mars 2001 (2001-03-09) & JP 2001 136862 A (HITACHI ZOSEN CORP), 22 mai 2001 (2001-05-22)
- PATENT ABSTRACTS OF JAPAN vol. 1999, no. 09, 30 juillet 1999 (1999-07-30) & JP 11 090421 A (ISHIKAWAJIMA HARIMA HEAVY IND CO LTD), 6 avril 1999 (1999-04-06)

## Description

L'invention concerne un procédé de traitement de fluides pollués par photocatalyse à l'aide de substrat souple porteur de composés photocatalytiques, tels que du papier ou du tissu, et des dispositifs faisant application.

### ARRIERE-PLAN DE L'INVENTION

On connaît des dispositifs de traitement par photocatalyse de fluide pollué, comportant un substrat souple porteur de composés photocatalytiques et des moyens de support maintenant le substrat souple de façon à laisser libre l'une des faces du substrat pour permettre un écoulement du fluide le long de ladite face libre. Des moyens d'éclairage étant disposés pour éclairer ladite face libre selon une longueur d'onde adaptée à déclencher des réactions chimiques de réduction des polluants organiques par photocatalyse à la surface du substrat.

Par exemple, on connaît du document GB 2 359 301 un dispositif comportant des parois rigides dont les deux faces sont recouvertes de tissus porteurs de composés photocatalytiques. Une source lumineuse permet l'éclairage des faces libres du substrat le long desquelles l'eau s'écoule pour favoriser les réactions de photocatalyse à la surface libre du substrat souple.

Procédés et dispositifs similaires sont également connus à partir des documents US 6 063 343 et EP 0 993 859.

L'efficacité du traitement est fonction de l'intensité lumineuse. Or cette efficacité tend vers une limite difficilement franchissable même avec des grandes intensités lumineuses.

### OBJET DE L'INVENTION

L'invention a pour objet un procédé de traitement par photocatalyse de fluide pollué dont l'efficacité est accrue par rapport à celle des procédés connus.

### BREVE DESCRIPTION DE L'INVENTION

En vue de la réalisation de ce but, on propose un procédé de traitement par photocatalyse de fluide pollué, lors duquel on maintient un substrat souple porteur de composés photocatalytiques de façon à laisser libre une première face le long de laquelle on fait couler le fluide en éclairant la première face du substrat, et lors duquel, selon l'invention, l'on éclaire également une seconde face de la feuille de papier photocatalytique.

Le déposant a en effet constaté par expérimentation que l'éclairage de l'autre face du substrat souple augmente l'efficacité du traitement.

L'invention est également relative à un dispositif spécialement adapté à la mise en oeuvre du procédé de l'invention, comportant des moyens de support d'un substrat souple porteur de composés photocatalytiques adaptés à laisser libre au moins la première face du substrat, des moyens de circulation étant adaptés à provoquer un écoulement du fluide le long de la première face, les moyens de support étant adaptés à permettre un éclairage de la seconde face du substrat souple.

### BREVE DESCRIPTION DES DESSINS

L'invention sera mieux comprise à la lumière de la description qui suit en référence aux figures des dessins annexés parmi lesquelles :
- la figure 1 est une vue en perspective d'un dispositif remorquable de traitement par photocatalyse des fluides pollués selon un premier mode particulier de réalisation de l'invention ;
- la figure 2 est une vue en coupe partielle selon le plan P de la figure 1 ;
- la figure 3 est une vue en perspective des moyens de support du substrat souple du dispositif de la figure 1, selon une variante de réalisation;
- la figure 4 est une vue en perspective des moyens de support du substrat souple du dispositif de la figure 1, selon une autre variante de réalisation;

### DESCRIPTION DETAILLEE DE L'INVENTION

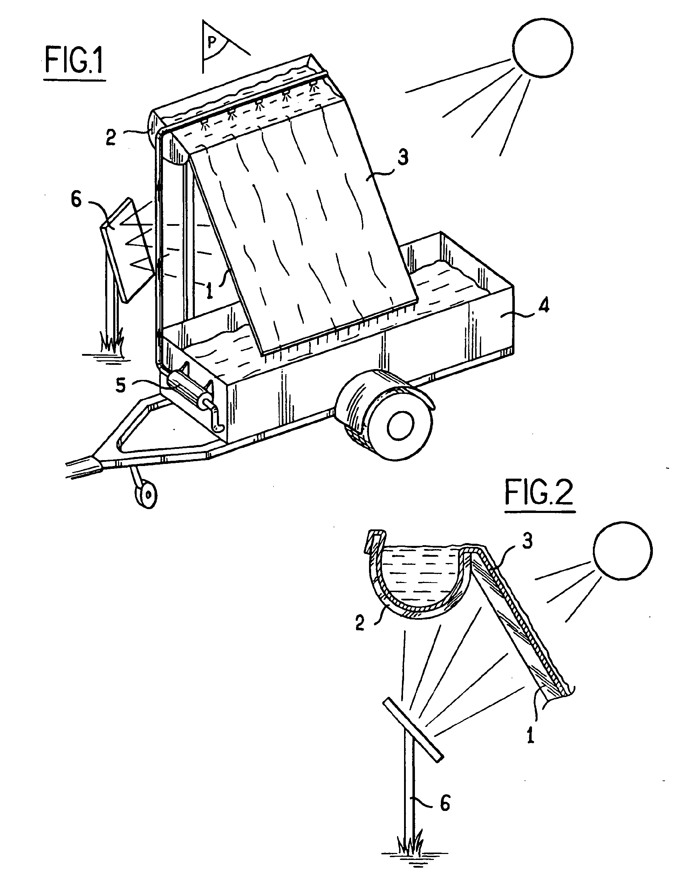

En référence à la figure 1, et selon un mode de réalisation particulier de l'invention, le dispositif se présente sous la forme d'un ensemble apte à être remorqué par un tracteur et comporte une paroi 1 en verre armé s'étendant selon un plan incliné. La paroi 1 est surmontée d'une cuvette 2. La paroi 1 est recouverte d'une feuille de papier photocatalytique 3 et s'étend en surplomb d'un réservoir 4. Une pompe 5 est agencée pour pomper le fluide contenu dans le réservoir 4 pour l'amener dans la cuvette 2.

Le fonctionnement du dispositif est le suivant. Le réservoir 4 est préalablement rempli de fluide pollué à traiter. Puis la pompe 5 est mise en route, de sorte que le fluide est transféré du réservoir 4 dans la cuvette 2. Lorsque le niveau de la cuvette 2 est suffisant, le fluide déborde et s'écoule sur la face libre de la feuille de papier photocatalytique 3 recouvrant la paroi 1 pour retomber dans le réservoir 4, de sorte que le fluide parcourt un circuit fermé.

Lors du séjour du fluide dans la cuvette 2, celui-ci subit une décantation de sorte que les polluants les plus lourds, en particulier les polluants non organiques, tombent au fond de la cuvette 2. Lors du passage du fluide sur la paroi 1, des réactions chimiques se produisent à la surface libre de la feuille de papier photocatalytique 3 ayant pour conséquence de réduire les polluants organiques (urée, engrais, etc...). Ces réactions chimiques sont catalysées par l'éclairage par le soleil de la face libre de la feuille de papier photocatalytique 3.

La réalisation selon l'invention de la paroi 1 en un matériau transparent permet l'éclairage de la face de la feuille de papier photocatalytique 3 qui s'étend contre la paroi 1, ce qui contribue à augmenter le taux de réactions chimiques sur la surface libre de la feuille de papier photocatalytique 3. A cet égard un réflecteur 6 muni d'une pointe pour son enfichage en terre est disposé de façon à renvoyer une partie des rayons du soleil sur la face interne de la paroi 1. Comme cela est schématisé à la figure 2, la face de la paroi 1 qui reçoit la feuille de papier photocatalytique 3 est éclairée directement par le soleil, tandis que l'autre face est éclairée via le réflecteur 6, ce qui permet une action des rayons du soleil sur les deux faces de la paroi 1, donc sur les deux faces de la feuille de papier photocatalytique 3.

La circulation en circuit fermé est ainsi poursuivie jusqu'à obtention du niveau de dépollution désiré. L'augmentation de l'efficacité de la photocatalyse par éclairage selon l'invention des deux faces de la feuille de papier photocatalytique permet de diminuer le temps de traitement.

Selon un aspect particulier de l'invention illustré à la figure 2, la feuille de papier photocatalytique 3 s'étend pour recouvrir également le fond de la cuvette 2. Les polluants tombant au fond de la cuvette 2 sont alors retenus par la feuille de papier photocatalytique pour éviter qu'ils ne polluent la partie de la feuille qui s'étend contre la paroi 1, ce qui risquerait d'inhiber une partie des réactions chimiques.

Selon une disposition intéressante de l'invention, la cuvette 2 elle-même est en matériau transparent, ce qui permet l'éclairage de la face du papier 3 qui s'étend contre le fond de la cuvette 2, favorisant ainsi un certain nombre de réactions chimiques directement dans la cuvette 2.

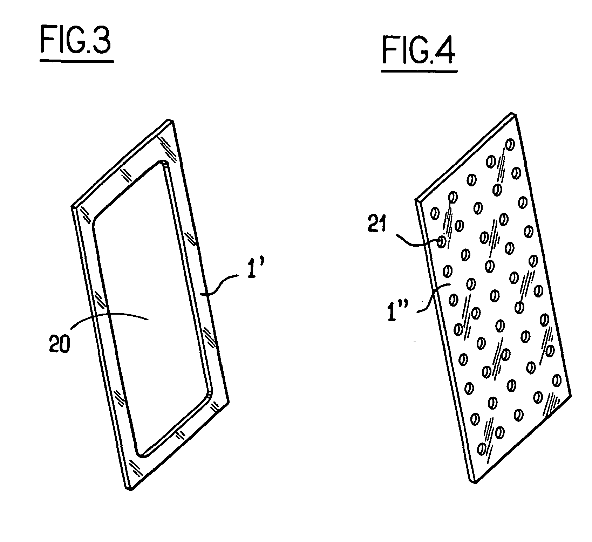

Selon une variante de réalisation illustrée à la figure 3, la paroi 1 est remplacée par une paroi 1' qui comporte une ouverture centrale 20 permettant l'éclairage de la face arrière de la feuille de papier photocatalytique.

Selon une autre variante de réalisation illustrée à la figure 4, la paroi 1 est remplacée par une paroi 1" qui comporte des orifices 21 (un seul est référencé) régulièrement répartis permettant l'éclairage de la face arrière de la feuille de papier photocatalytique.

L'invention n'est pas limitée à ce qui vient d'être décrit et englobe toute variante entrant dans le cadre défini par les revendications.

En particulier, bien que le substrat souple soit ici du papier, on pourra utiliser d'autres substrats souples comme du tissu.

Bien que dans le mode particulier de réalisation, les moyens de support comportent une paroi transparente ou encore une paroi ajourée, la paroi pourra prendre toute forme du moment qu'elle permette un éclairage de la seconde face du substrat. Par exemple, la paroi pourra être réalisée en grillage ou être formée d'un réseau de câbles tendus sur un cadre. La paroi peut ne pas être plane.

## Revendications

1. Dispositif de traitement par photocatalyse de fluide pollué, comportant des moyens de support (1, 1') d'un substrat souple (3) porteur de composés photo-catalytiques qui sont adaptés à laisser libre au moins une première face du substrat souple, le dispositif comportant des moyens de circulation (5) adaptés à provoquer un écoulement du fluide uniquement le long de la première face du substrat souple, **caractérisé en ce que** les moyens de support comportent une paroi (1) contre laquelle une seconde face du substrat souple s'étend et qui est adaptée à permettre un éclairage de la seconde face du substrat souple à travers la paroi, le dispositif comportant un réflecteur (6) est disposé par rapport à la paroi (1) pour réfléchir de la lumière vers la paroi en vue d'éclairer la seconde face du substrat souple.

2. Dispositif de traitement par photocatalyse de fluide pollué selon la revendication 1, comportant une cuvette (2) en amont de la paroi (1) en référence à un sens d'écoulement du fluide, le substrat souple (3) s'étendant pour recouvrir également un fond de la cuvette (2).

3. Dispositif selon la revendication 2, dans lequel la cuvette (2) est adaptée à permettre un éclairage de la seconde face du substrat souple recouvrant la cuvette.

4. Dispositif selon la revendication 1, dans lequel la paroi (1) est en matériau transparent à des ondes électromagnétiques qui catalysent des réactions chimiques à la surface du papier photocatalytique (3).

5. Dispositif selon la revendication 2, dans lequel la paroi est ajourée (1', 1").

## Patentansprüche

1. Vorrichtung zur photokatalytischen Behandlung eines verschmutzten Fluids, umfassend Trägermittel (1, 1') zum Tragen eines flexiblen Substrats (3), das photokatalytische Verbindungen trägt, wobei die Trägermittel dazu geeignet sind, mindestens eine erste Seite des flexiblen Substrats frei zu lassen, wobei die Vorrichtung Zirkulationsmittel (5) umfasst, die dazu geeignet sind, ein Fließen des Fluids einzig entlang der ersten Seite des flexiblen Substrats zu bewirken, **dadurch gekennzeichnet, dass** die Trägermittel eine Wand (1) umfassen, an der sich eine zweite Seite des flexiblen Substrats erstreckt und die dazu geeignet ist, eine Bestrahlung der zweiten Seite des flexiblen Substrats durch die Wand hindurch zu ermöglichen, wobei die Vorrichtung einen Reflektor (6) umfasst, der in Bezug auf die Wand (1) derart angeordnet ist, dass er das Licht in Richtung der Wand reflektiert, um die zweite Seite des flexiblen Substrats zu bestrahlen.

2. Vorrichtung zur photokatalytischen Behandlung eines verschmutzten Fluids nach Anspruch 1, umfassend eine Wanne (2), die in Bezug auf eine Fließrichtung des Fluids stromaufwärts der Wand (1) angeordnet ist, wobei sich das flexible Substrat (3) derart erstreckt, dass es ebenfalls einen Boden der Wanne (2) bedeckt.

3. Vorrichtung nach Anspruch 2, wobei die Wanne (2) dazu geeignet ist, ein Bestrahlen der zweiten Seite des die Wanne bedeckenden flexiblen Substrats zu ermöglichen.

4. Vorrichtung nach Anspruch 1, wobei die Wand (1) aus einem Material ist, das gegenüber elektromagnetischen Wellen transparent ist, die auf der Oberfläche des photokatalytischen Papiers (3) chemische Reaktionen katalysieren.

5. Vorrichtung nach Anspruch 2, wobei die Wand durchbrochen (1', 1") ist.

## Claims

1. Device for photocatalytic treatment of polluted fluid including support means (1, 1') for a flexible substrate (3) carrying photocatalytic compounds adapted to leave free at least a first face of the flexible substrate, the device including circulation means (5) adapted to cause the fluid to flow only along the first face of the flexible substrate, **characterized in that** the support means include a wall (1) against which a second face of the flexible substrate (3) lies and which is adapted to permit illumination of the second face of the flexible substrate through the wall, the device including a reflector (6) disposed relative to the wall (1) to reflect light toward the wall to illuminate the second face of the flexible substrate.

2. Device according to claim 1 for photocatalytic treatment of polluted fluid, including a tank (2) upstream of the wall (1) with reference to a direction of flow of the fluid, the flexible substrate (3) extending so as also to cover a bottom of the tank (2).

3. Device according to claim 2, wherein the tank (2) is adapted to permit illumination of the second side of the flexible substrate covering the tank.

4. Device according to claim 1, wherein the wall (1) is made of a material transparent to electromagnetic waves that catalyze chemical reactions at the surface of the photocatalytic paper (3).

5. Device according to claim 2, wherein the wall is perforated (1', 1").
